# EUROPÄISCHE PATENTSCHRIFT

(11) **EP 4 030 252 B1**
(45) Veröffentlichungstag und Bekanntmachung des Hinweises auf die Patenterteilung: **10.05.2023**
(21) Anmeldenummer: 21152062.2
(22) Anmeldetag: 18.01.2021
(51) Int. Cl.: G05B 23/02

(54) **LASTMANAGEMENT BEI DER DARSTELLUNG EINER ALARMMELDUNGSANZEIGE**
LOAD MANAGEMENT IN THE DISPLAY OF AN ALARM MESSAGE DISPLAY
GESTION DE LA CHARGE LORS DE L'AFFICHAGE D'UN INDICATEUR DE MESSAGE D'ALARME

(43) Veröffentlichungstag der Anmeldung: 20.07.2022
(73) Patentinhaber: Siemens Aktiengesellschaft, 80333 München (DE)
(72) Erfinder: Kluge, Georg, 76351 Linkenheim (DE); Lutz, Benjamin, 76327 Pfinztal (DE)
(74) Vertreter: Siemens Patent Attorneys

(56) Entgegenhaltungen:
- EP-A1- 3 115 855
- EP-A1- 3 736 647

## Beschreibung

Die Erfindung betrifft ein Leitsystem für eine technische Anlage, insbesondere Prozess- oder Fertigungsanlage, das einen Operator Station Server und einen Operator Station Client aufweist, wobei der Operator Station Server dazu ausgebildet ist, zur Bedienung und Beobachtung ein Anlagenbild der technischen Anlage an den Operator Station Client zu übertragen, wobei das Anlagenbild eine Alarmmeldungsanzeige umfasst, und wobei der Operator Station Client dazu ausgebildet ist, das Anlagenbild mit der Alarmmeldungsanzeige visuell darzustellen. Außerdem betrifft die Erfindung die Verwendung eines Leitsystems und ein Verfahren zur visuellen Darstellung eines Anlagenbildes einer technischen Anlage.

Für die Bedienung und Beobachtung verfahrenstechnischer Anlagen erstellen Leitsysteme der verfahrenstechnischen Anlagen symbolische Anlagenbilder, die die verfahrenstechnischen Zusammenhänge - insbesondere zwischen einzelnen Prozessobjekten der verfahrenstechnischen Anlagen - abstrahiert darstellen.

Anlagenbilder setzen sich aus statischen Symbolen (z.B. Leitungen, Rechtecke, usw.), dynamisierten Symbolen (z.B. Leitungen mit Farbumschlag oder Rechtecke mit Füllständen, die sich in Abhängigkeit von Prozessmesswerten ändern), Blocksymbolen (zur dynamisierten Visualisierung verfahrenstechnischer Prozessobjekte), komplexe Controls (z.B. Trendanzeigen, Meldefolgeanzeigen, usw.) und Container, in welchen Inhalte aus unabhängigen und eigenständige Quellen visualisiert werden können. Bei diesen Quellen kann es sich beispielsweise um Webcams, Anlagenbilder modularer Anlagenteile (sogenannte "Package Units"), Apps (z.B. Regleroptimierer, KPI-Berechnungen) und dergleichen handeln.

Die Container werden durch unterschiedliche Technologien realisiert. In modernen weborientierten Leitsystemen können hierzu sogenannte "iFrames" verwendet werden, die beispielsweise in der von der Firma SIEMENS verwendeten SWAC-Technologie Anwendung finden (SWAC steht hierbei für "Siemens Web Application Collaboration").

Auch die zuvor genannten komplexen Controls (Trendanzeigen, XY-Graphen, Meldefolgeanzeigen, SFC-Schrittketten, CFC-Visualisierung, Batch, usw.) können mithilfe von Containern in Anlagenbilder eingebettet werden, da so die zugrunde liegenden Applikationen serverseitig entkoppelt und verteilt werden können, um ein höheres Maß an Robustheit zu erreichen.

Eine zentrale Rolle im Kontext eines Alarmmanagements bei der Bedienung und Beobachtung einer (verfahrens-)technischen Anlage spielt die sogenannte "Meldefolgeanzeige". Eine solche Meldefolgeanzeige ist beispielsweise in der WO 2020/064712 A1 und der EP 3680740 A1 offenbart. In einer Meldefolgeanzeige werden einem Operator der (verfahrens-)technischen Anlage Meldungen visuell dargeboten, die in der Regel einen Betrieb der Anlage betreffen. Unter einer Meldung wird allgemein ein Bericht vom Eintreten eines Ereignisses verstanden, das einen Übergang aus einem diskreten Zustand innerhalb der (verfahrens-)technischen Anlage in einen anderen diskreten Zustand darstellt. Dadurch wird ermöglicht, dass der oder die Operatoren möglichst frühzeitig genau über die Folge bzw. das Ergebnis ihrer Handlungen (die Folge ihrer Anfragen) im jeweiligen Systemkontext informiert werden. Alarmmeldungen (oder kurz: Alarme) stellen dabei spezielle Meldungen dar, die eine in der Regel unverzügliche Reaktion des Operators der (verfahrens-)technischen Anlage erfordern.

Meldefolgeanzeigen mit Alarmmeldungen nach dem Stand der Technik können bei langanhaltender Volatilität von Alarmänderungen, hohem Alarmaufkommen oder schlagartigem Alarmaufkommen an ihre Grenzen kommen und die ihnen zur Visualisierung zur Verfügung gestellten Zeitkontingente oftmals nicht mehr einhalten. Dies kann zu deutlichen Performanzverlusten bei der Bedienung und Beobachtung der (verfahrens-)technischen Anlage bis hin zu einem Ausfall der Bedienung und Beobachtung führen. Die Druckschrift EP 3736647 A1 offenbart einen Operator Station Server eines Leitsystems einer verfahrenstechnischen Anlage, der ein computerimplementiertes Prozessabbild aufweist, wobei das computerimplementierte Prozessabbild zu einer Laufzeit der verfahrenstechnischen Anlage wenigstens ein erstes computerimplementiertes Prozessobjekt und ein zweites computerimplementiertes Prozessobjekt umfasst, die jeweils einem technischen Objekt der verfahrenstechnischen Anlage zugeordnet sind und mit diesem in Wirkverbindung stehen, wobei die beiden zugeordneten technischen Objekte in einer Wirkverbindung innerhalb der verfahrenstechnischen Anlage stehen.

Der Erfindung liegt die Aufgabe zugrunde, ein Leitsystem für eine technische Anlage anzugeben, das mit einer hohen Verfügbarkeit eine Alarmmeldungsanzeige darstellen kann.

Diese Aufgabe wird gelöst durch ein Leitsystem für eine technische Anlage, insbesondere eine Fertigungs- oder Prozessanlage, mit den Merkmalen des Anspruchs 1. Zudem wird die Aufgabe gelöst durch die Verwendung eines Leitsystems zum Betrieb einer technischen Anlage gemäß Anspruch 6. Zudem wird die Aufgabe gelöst durch ein Verfahren zur visuellen Darstellung eines Anlagenbildes einer technischen Anlage gemäß Anspruch 7. Vorteilhafte Weiterbildungen ergeben sich aus den abhängigen Ansprüchen.

Ein Leitsystem eingangs beschriebener Art ist erfindungsgemäße dadurch gekennzeichnet, dass der Operator Station Server einen computerimplementierten Alarmmeldungsdienst aufweist, der dazu ausgebildet ist, dem Operator Station Client beim Übertragen des Anlagenbildes mit der Alarmmeldungsanzeige mitzuteilen, welche Zeitdauer er für die visuelle Darstellung der Alarmmeldungsanzeige aufwenden darf, und wobei der Operator Station Client dazu ausgebildet ist, zu ermitteln, welchen Betrag eine tatsächliche Darstellungszeit für die visuelle Darstellung der Alarmmeldungsanzeige aufweist, wobei der Alarmmeldungsdienst weiterhin dazu ausgebildet ist, den Operator Station Client über ein Aufkommen einer neuen oder aktualisierten Alarmmeldung in dem Leitsystem über eine Nachricht zu informieren, wobei der Operator Station Client dazu ausgebildet ist, zu bestimmen, ob eine Darstellungszeit für die visuelle Darstellung der Alarmmeldungsanzeige mit der neuen oder aktualisierten Alarmmeldung die Zeitdauer, die der Operator Station Client für die visuelle Darstellung der Alarmmeldungsanzeige aufwenden darf, betragsmäßig übersteigen würde, und wobei der Operator Station Client weiterhin dazu ausgebildet ist, bei einer Übersteigung der zur Verfügung stehenden Zeitdauer die visuelle Darstellung der Alarmmeldungsanzeige zu beschränken.

Unter einem Leitsystem wird im vorliegenden Kontext ein computergestütztes technisches System verstanden, das Funktionalitäten zum Darstellen, Bedienen und Leiten eines technischen Systems wie einer Fertigungs- oder Produktionsanlage umfasst. Das Leitsystem kann neben dem Operator Station Server und dem Operator Station Client beispielsweise auch sogenannte prozess- oder fertigungsnahe Komponenten umfassen, die zur Ansteuerung von Aktoren bzw. Sensoren dienen.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Unter einem "Operator Station Server" wird vorliegend ein Server verstanden, der zentral Daten eines Bedien- und Beobachtungssystems sowie in der Regel Alarm- und Messwertarchive eines Leitsystems einer technischen Anlage erfasst und Benutzern zur Verfügung stellt. Der Operator Station Server stellt in der Regel eine Kommunikationsverbindung zu Automatisierungssystemen (wie einem Automatisierungsgerät) der technischen Anlage her und gibt Daten der technischen Anlage an sogenannte "Operator Station Clients" weiter, die zur Bedienung und Beobachtung eines Betriebs der einzelnen Funktionselemente der technischen Anlage dienen.

Der Operator Station Server kann selbst über Client-Funktionen verfügen, um auf die Daten (Archive, Meldungen, Tags, Variablen) anderer Operator Station Server zuzugreifen. Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Bei dem Anlagenbild, welches der Operator Station Server an den Operator Station Client zur visuellen Darstellung überträgt, handelt es sich um ein üblicherweise für Leitsysteme verwendetes Bedienbild, welches grafische Repräsentationen einzelner Elemente der technischen Anlage umfasst und zur Darstellung eines Status der einzelnen Elemente, eines (z.B. verfahrenstechnischen) Zusammenhangs zwischen den Elementen oder dgl. dient.

Das Anlagenbild umfasst wenigstens eine Alarmmeldungsanzeige. Diese kann beispielsweise in tabellarischer Auflistung einen Überblick über in dem Leitsystem aufgekommene Alarmmeldungen liefern. Sie wird auch als Meldefolgeanzeige bezeichnet.

Der computerimplementierte Alarmmeldungsdienst des Operator Station Servers teilt dem Operator Station Client beim Übertragen des Anlagenbildes mit der Alarmmeldungsanzeige die zusätzliche Information mit, welche Zeitdauer der Operator Station Client für die visuelle Darstellung der Alarmmeldungsanzeige aufwenden darf. Mit anderen Worten gibt er dem Operator Station Client ein Zeitbudget mit, das ihm für das Zeichnen der Alarmmeldungsanzeige zur Verfügung steht. Dieses Zeitbudget kann im Engineering, d.h. beim Erstellen einer Automatisierung der technischen Anlage, festgelegt worden sein.

Wenn nun der eine neue bzw. aktualisierte Alarmmeldung (oder eine Vielzahl von Alarmmeldungen) in dem Leitsystem aufkommt, überträgt der Alarmmeldungsdienst des Operator Station Servers dieses nicht sofort an den Operator Station Client, sondern sendet zuerst eine Nachricht an den Operator Station Client, die diesen über das Aufkommen der neuen / aktualisierten Alarmmeldung informiert. Der Operator Station Client kann hieraufhin berechnen, ob ihm sein Zeitbudget zur Darstellung der neuen Alarmmeldungssituation reicht. Hierzu prüft er, ob die Darstellungszeit für die visuelle Darstellung der Alarmmeldungsanzeige mit der neuen oder aktualisierten Alarmmeldung die Zeitdauer, die der Operator Station Client für die visuelle Darstellung der Alarmmeldungsanzeige aufwenden darf, übersteigen würde.

Falls dies nicht der Fall ist, kann der Operator Station Client die neue/aktualisierte Alarmmeldung vom Operator Station Server abrufen und in der Alarmmeldungsanzeige visuell darstellen.

Falls das Zeitbudget überschritten werden würde, ist der Operator Station Client dazu ausgebildet, die visuelle Darstellung der Alarmmeldungsanzeige zu beschränken. Dadurch kann er dynamisch auf sich verändernde Anforderungen reagieren. Ein (zeitweise) Ausfall der Anzeige zur Bedienung und Beobachtung kann damit effektiv verhindert werden, so dass die technische Anlage zu jedem Zeitpunkt bedienbar und beobachtbar ist. Diese Vorteile kommen vor allem bei einer langanhaltenden Volatilität von Alarmänderungen, bei einem generell hohen Alarmaufkommen oder bei plötzlichen "Alarmschwallen" zum Tragen. Zudem ist das erfindungsgemäße Leitsystem in erhöhtem Maße für eine Ausführung auf verschiedenen Hardwareplattformen, wie sie insbesondere bei Verwendung von webbasierten Leitsystemen zum Einsatz kommen, auf vorteilhafte Art und Weise geeignet.

Bevorzugt umfasst die Nachricht, die von dem Alarmmeldungsdienst an den Operator Station Client übermittelbar ist, eine Information über eine Kritikalität der Alarmmeldung. Entsprechend kann bei dem Leitsystem die Beschränkung der visuellen Darstellung der Alarmmeldungsanzeige darin bestehen, dass nur Alarmmeldungen dargestellt werden, die eine bestimmte Kritikalität aufweisen. Der Operator Station Client kann hierbei zunächst diejenigen Alarmmeldungen von dem Operator Station Server abrufen und visuell darstellen, die eine hohe Kritikalität aufweisen. Diese Alarmmeldungen werden demnach mit einer höheren Priorität behandelt. Ein Maß für die Kritikalität kann eine Alarmklasse der Alarmmeldungen sein.

Im Rahmen einer vorteilhaften Weiterbildung der Erfindung kann die Nachricht, die von dem Alarmmeldungsdienst an den Operator Station Client übermittelbar ist, eine Information über eine möglicherweise bereits erfolgte Quittierung der Alarmmeldung umfassen. Entsprechend kann die Beschränkung der visuellen Darstellung der Alarmmeldungsanzeige darin bestehen, dass nur Alarmmeldungen dargestellt werden, die noch nicht quittiert worden sind. Sind die Alarmmeldungen bereits quittiert, d.h. durch einen Operator der technischen Anlage behandelt bzw. bearbeitet worden, weisen diese in der Regel eine geringere Dringlichkeit auf und können daher zugunsten anderer, dringlicherer Alarmmeldungen zurückgestellt werden.

Es können alternativ oder zusätzlich weitere Kriterien verwendet werden, um die visuelle Darstellung der Alarmmeldungsanzeige zu beschränken. Beispielsweise können Alarmmeldungen ausgeschlossen werden, die zuvor aus einem bestimmten Grund verborgen worden sind (im Rahmen eines sogenannten "Alarm Shelving"). Auch kann beispielsweise eine zeitliche Reihenfolge der neuen / aktualisierten Alarmmeldungen als Kriterium für die Beschränkung der visuellen Darstellung verwendet werden.

Die zuvor formulierte Aufgabe wird zudem gelöst durch die Verwendung eines Leitsystems, welches wie zuvor erläutert ausgebildet ist, zum Betrieb einer technischen Anlage, insbesondere Prozess- oder Fertigungsanlage.

Die Aufgabe wird zudem gelöst durch ein Verfahren zur visuellen Darstellung eines Anlagenbildes einer technischen Anlage, insbesondere Prozess- oder Fertigungsanlage, die einen Operator Station Server und einen Operator Station Client aufweist, wobei das Anlagenbild eine Alarmmeldungsanzeige umfasst, das Verfahren umfassend:
a) Übertragen eines Anlagenbilds der technischen Anlage von dem Operator Station Server an den Operator Station Client, wobei das Anlagenbild die Alarmmeldungsanzeige umfasst;
b) Beim Übertragen des Anlagenbildes mit der Alarmmeldungsanzeige, Mitteilen einer Zeitdauer, die der Operator Station Client für die visuelle Darstellung der Alarmmeldungsanzeige aufwenden darf, durch einen computerimplementierten Alarmmeldungsdienst des Operator Station Servers;
c) Visuelle Darstellung des Anlagenbildes mit der Alarmmeldungsanzeige durch den Operator Station Client;
d) Informieren des Operator Station Clients über ein Aufkommen einer neuen oder aktualisierten Alarmmeldung in dem Leitsystem über eine Nachricht durch den Alarmmeldungsdienst;
e) Ermitteln durch den Operator Station Client, welchen Betrag eine tatsächliche Darstellungszeit für die visuelle Darstellung der Alarmmeldungsanzeige aufweist;
f) Bestimmen durch den Operator Station Client, ob eine Darstellungszeit für die visuelle Darstellung der Alarmmeldungsanzeige mit der neuen oder aktualisierten Alarmmeldung die Zeitdauer, die der Operator Station Client für die visuelle Darstellung der Alarmmeldungsanzeige aufwenden darf, betragsmäßig übersteigen würde;
g) Beschränken der visuellen Darstellung der Alarmmeldungsanzeige durch den Operator Station Client bei einer Übersteigung der zur Verfügung stehenden Zeitdauer.

Bevorzugt umfasst die Nachricht, die von dem Alarmmeldungsdienst im Verfahrensschritt e an den Operator Station Client übermittelt wird, eine Information über eine Kritikalität der Alarmmeldung.

Besonders bevorzugt umfasst die Nachricht, die von dem Alarmmeldungsdienst im Verfahrensschritt e an den Operator Station Client übermittelt wird, eine Information über eine möglicherweise bereits erfolgte Quittierung der Alarmmeldung.

Die Beschränkung der visuellen Darstellung der Alarmmeldungsanzeige kann bei dem Verfahren darin bestehen, dass nur Alarmmeldungen dargestellt werden, die eine bestimmte Kritikalität aufweisen.

Die Beschränkung der visuellen Darstellung der Alarmmeldungsanzeige kann alternativ oder zusätzlich auch darin bestehen, dass nur Alarmmeldungen dargestellt werden, die noch nicht quittiert worden sind.

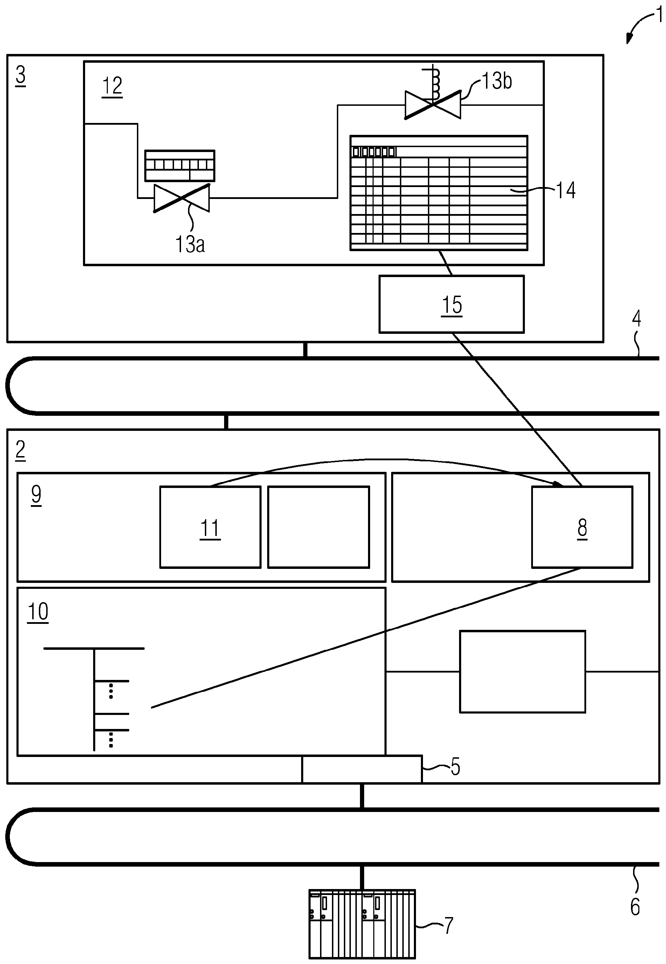

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit der Zeichnung näher erläutert wird.

In der Figur ist ein Teil eines erfindungsgemäßen Leitsystems 1 einer als Prozessanlage, d.h. als verfahrenstechnische Anlage, ausgebildeten technischen Anlage dargestellt. Das Leitsystem 1 umfasst einen Operator Station Server 2 und einen Operator Station Client 3.

Der Operator Station Server 2 und der Operator Station Client 3 sind über einen Terminalbus 4 miteinander und optional mit nicht dargestellten weiteren Komponenten des Leitsystems 1 wie einem Prozessdatenarchiv verbunden.

Ein Benutzer bzw. Operator kann zum Zwecke des Bedienens und Beobachtens über den Operator Station Client 3 mittels des Terminalbus 4 auf den Operator Station Server 2 zugreifen. Der Terminalbus 4 kann, ohne sich darauf zu beschränken, beispielsweise als Industrial Ethernet ausgebildet sein.

Der Operator Station Server 2 weist eine Geräteschnittstelle 5 auf, die mit einem Anlagenbus 6 verbunden ist. Über diese Geräteschnittstelle 5 kann der Operator Station Server 2 mit einem Automatisierungsgerät 7 sowie mit optional vorhandenen weiteren Komponenten der Prozessanlage kommunizieren. Der Anlagenbus 6 kann, ohne sich darauf zu beschränken, beispielsweise als Industrial Ethernet ausgebildet sein. Das Automatisierungsgerät 7 kann mit einer beliebigen Anzahl an Subsystemen (nicht dargestellt) verbunden sein.

Auf dem Operator Station Server 2 sind ein Alarmmeldungsdienst 8, ein Visualisierungsdienst 9 und ein Prozessabbild 10 implementiert. Der Alarmmeldungsdienst 8 bekommt von dem Visualisierungsdienst 9 eine Information 11 bezüglich eines Anlagenbildes übermittelt, welches gemäß einer Automatisierungs-Projektierung der technischen Anlage von dem Operator Station Client 3 (auf einem Bildschirm) visuell dargestellt werden soll. In der Figur ist innerhalb des den Operator Station Client 3 repräsentierenden Symbols ein solches Anlagenbild 12 dargestellt. Es zeigt exemplarisch zwei miteinander verbundene Symbole für Ventile 13a, 13b und eine Alarmmeldungsanzeige 14.

Im Folgenden wird der Ablauf eines erfindungsgemäßen Verfahrens beschrieben: Der Alarmmeldungsdienst 8 entnimmt der Information 11 die Alarmmeldungen, die hierzu gehörig sind. Zusätzlich entnimmt der Alarmmeldungsdienst 8 der Information 11 eine Zeitdauer, die der Operator Station Client 3 für die visuelle Darstellung der Alarmmeldungsanzeige 14 aufwenden darf. Diese Zeitdauer wurde zuvor von einem Projekteur der technischen Anlage im Rahmen eines Engineerings / Projektierens der Automatisierung der technischen Anlage festgelegt. Der Operator Station Client 3 stellt das Anlagenbild 12 mit der (zunächst leeren) Alarmmeldungsanzeige 14 visuell dar.

Tritt nun eine Alarmmeldung in dem Leitsystem 1 auf, wird diese in dem Prozessabbild 10 hinterlegt. Der Alarmmeldungsdienst 8 wird über das Aufkommen der neuen Alarmmeldung informiert oder er überwacht das Prozessabbild 10 hinsichtlich neuer / aktualisierter Alarmmeldungen.

Anschließend informiert der Alarmmeldungsdienst 8 einen Alarmdienst 15 des Operator Station Clients 3 über das Aufkommen der neuen Alarmmeldung und teilt ihm mit, welche Kritikalität die Alarmmeldung aufweist, ob die Alarmmeldung bereits quittiert wurde und ob die Alarmmeldung zuvor verborgen gewesen ist (Alarm Shelving. Der Alarmdienst 15 des Operator Station Clients 3 ermittelt dann, ob eine Darstellungszeit für die visuelle Darstellung der Alarmmeldungsanzeige 14 mit der neuen oder aktualisierten Alarmmeldung die Zeitdauer, die der Operator Station Client 3 für die visuelle Darstellung der Alarmmeldungsanzeige aufwenden darf, betragsmäßig übersteigen würde. Wäre dies der Fall und würde der Operator Station Client 3 keine Gegenmaßnahmen ergreifen, würde der Operator Station Client 3 speziell bei einer Vielzahl von Alarmmeldungen an seine Leistungsgrenzen kommen und ausfallen.

Falls die Begrenzung nicht überstiegen werden würde, ruft der Alarmdienst 15 des Operator Station Clients 3 die Alarmmeldung(en) aktiv von dem Alarmmeldungsdienst 8 des Operator Station Servers 2 ab.

Wenn das Zeitbudget, also die Zeitdauer, die der Operator Station Client 3 für die visuelle Darstellung der Alarmmeldungsanzeige 14 aufwenden darf, durch die neu hinzugekommene (oder aktualisierte) Alarmmeldung(en) überschritten werden würde, beschränkt der Alarmdienst 15 des Operator Station Clients 3 die visuelle Darstellung dadurch, dass er nur einen Bruchteil der Alarmmeldungen von dem Operator Station Server 2 abruft. Dabei kann er beispielsweise eine Kritikalität der Alarmmeldungen oder die Tatsache, dass eine Alarmmeldung bereits quittiert worden ist, für die Beschränkung berücksichtigen. Die entsprechend ausgenommenen Alarmmeldungen werden dann (vorerst) nicht von dem Operator Station Server 2 abgerufen. Es können auch mehrerer Beschränkungsregeln gleichzeigt oder nacheinander angewandt werden.

Die zunächst nicht abgerufenen Alarmmeldungen können zu einem späteren Zeitpunkt (wenn der Operator Station Client 3 nicht mehr seine Leistungsgrenzen zu übersteigen droht) nachgeladen werden.

Insgesamt kann durch die Erfindung ein Beitrag für eine höhere Verfügbarkeit der technischen Anlage geleistet werden, speziell bei Anwendung eines webbasierten Leitsystems.

## Patentansprüche

1. Leitsystem (1) für eine technische Anlage, insbesondere Prozess- oder Fertigungsanlage, das einen Operator Station Server (2) und einen Operator Station Client (3) aufweist, wobei der Operator Station Server (2) dazu ausgebildet ist, zur Bedienung und Beobachtung ein Anlagenbild (11, 12) der technischen Anlage an den Operator Station Client (3) zu übertragen, wobei das Anlagenbild (11, 12) eine Alarmmeldungsanzeige (14) umfasst,
und wobei der Operator Station Client (3) dazu ausgebildet ist, das Anlagenbild (11, 12) mit der Alarmmeldungsanzeige (14) visuell darzustellen,
**dadurch gekennzeichnet, dass**
der Operator Station Server (2) einen computerimplementierten Alarmmeldungsdienst (8) aufweist, der dazu ausgebildet ist, dem Operator Station Client (3) beim Übertragen des Anlagenbildes (11, 12) mit der Alarmmeldungsanzeige (14) mitzuteilen, welche Zeitdauer er für die visuelle Darstellung der Alarmmeldungsanzeige (14) aufwenden darf,
und wobei der Operator Station Client (3) dazu ausgebildet ist, zu ermitteln, welchen Betrag eine tatsächliche Darstellungszeit für die visuelle Darstellung der Alarmmeldungsanzeige (14) aufweist,
wobei der Alarmmeldungsdienst (8) weiterhin dazu ausgebildet ist,
den Operator Station Client (3) über ein Aufkommen einer neuen oder aktualisierten Alarmmeldung in dem Leitsystem (1) über eine Nachricht zu informieren,
wobei der Operator Station Client (3) dazu ausgebildet ist, zu bestimmen, ob eine Darstellungszeit für die visuelle Darstellung der Alarmmeldungsanzeige (14) mit der neuen oder aktualisierten Alarmmeldung die Zeitdauer, die der Operator Station Client (3) für die visuelle Darstellung der Alarmmeldungsanzeige (14) aufwenden darf, betragsmäßig übersteigen würde,
und wobei der Operator Station Client (3) weiterhin dazu ausgebildet ist, bei einer Übersteigung der zur Verfügung stehenden Zeitdauer die visuelle Darstellung der Alarmmeldungsanzeige (14) zu beschränken.

2. Leitsystem (1) nach Anspruch 1, bei dem die Nachricht, die von dem Alarmmeldungsdienst (8) an den Operator Station Client (3) übermittelbar ist, eine Information über eine Kritikalität der Alarmmeldung umfasst.

3. Leitsystem (1) nach Anspruch 1 oder 2, bei dem die Nachricht, die von dem Alarmmeldungsdienst (8) an den Operator Station Client (3) übermittelbar ist, eine Information über eine möglicherweise bereits erfolgte Quittierung der Alarmmeldung umfasst.

4. Leitsystem (1) nach einem der vorangegangenen Ansprüche, bei dem die Beschränkung der visuellen Darstellung der Alarmmeldungsanzeige (14) darin besteht, dass nur Alarmmeldungen dargestellt werden, die eine bestimmte Kritikalität aufweisen.

5. Leitsystem (1) nach einem der vorangegangenen Ansprüche, bei dem die Beschränkung der visuellen Darstellung der Alarmmeldungsanzeige (14) darin besteht, dass nur Alarmmeldungen dargestellt werden, die noch nicht quittiert worden sind.

6. Verwendung eines Leitsystems (1) gemäß einem der Ansprüche 1 bis 5 zum Betrieb einer technischen Anlage, insbesondere Prozess- oder Fertigungsanlage.

7. Verfahren zur visuellen Darstellung eines Anlagenbildes (11, 12) einer technischen Anlage, insbesondere Prozess- oder Fertigungsanlage, die einen Operator Station Server (2) und einen Operator Station Client (3) aufweist, wobei das Anlagenbild (11, 12) eine Alarmmeldungsanzeige (14) umfasst, das Verfahren umfassend:
a) Übertragen eines Anlagenbilds (11, 12) der technischen Anlage von dem Operator Station Server (2) an den Operator Station Client (3), wobei das Anlagenbild (1, 12) die Alarmmeldungsanzeige (14) umfasst;
b) Beim Übertragen des Anlagenbildes (11, 12) mit der Alarmmeldungsanzeige (14), Mitteilen einer Zeitdauer, die der Operator Station Client (3) für die visuelle Darstellung der Alarmmeldungsanzeige (14) aufwenden darf, durch einen computerimplementierten Alarmmeldungsdienst (8) des Operator Station Servers (2);
c) Visuelle Darstellung des Anlagenbildes (11, 12) mit der Alarmmeldungsanzeige (14) durch den Operator Station Client (3) ;
d) Informieren des Operator Station Clients (3) über ein Aufkommen einer neuen oder aktualisierten Alarmmeldung in dem Leitsystem (1) über eine Nachricht durch den Alarmmeldungsdienst (8);
e) Ermitteln durch den Operator Station Client (3), welchen Betrag eine tatsächliche Darstellungszeit für die visuelle Darstellung der Alarmmeldungsanzeige (14) aufweist;
f) Bestimmen durch den Operator Station Client (3), ob eine Darstellungszeit für die visuelle Darstellung der Alarmmeldungsanzeige (14) mit der neuen oder aktualisierten Alarmmeldung die Zeitdauer, die der Operator Station Client (3) für die visuelle Darstellung der Alarmmeldungsanzeige (14) aufwenden darf, betragsmäßig übersteigen würde;
g) Beschränken der visuellen Darstellung der Alarmmeldungsanzeige (14) durch den Operator Station Client (3) bei einer Übersteigung der zur Verfügung stehenden Zeitdauer.

8. Verfahren nach Anspruch 7, bei dem die Nachricht, die von dem Alarmmeldungsdienst (14) im Verfahrensschritt e an den Operator Station Client (3) übermittelt wird, eine Information über eine Kritikalität der Alarmmeldung umfasst.

9. Verfahren nach Anspruch 7 oder 8, bei dem die Nachricht, die von dem Alarmmeldungsdienst (14) im Verfahrensschritt e an den Operator Station Client (3) übermittelt wird, eine Information über eine möglicherweise bereits erfolgte Quittierung der Alarmmeldung umfasst.

10. Verfahren nach einem der Ansprüche 7 bis 9, bei dem die Beschränkung der visuellen Darstellung der Alarmmeldungsanzeige (14) darin besteht, dass nur Alarmmeldungen dargestellt werden, die eine bestimmte Kritikalität aufweisen.

11. Verfahren nach einem der Ansprüche 7 bis 10, bei dem die Beschränkung der visuellen Darstellung der Alarmmeldungsanzeige (14) darin besteht, dass nur Alarmmeldungen dargestellt werden, die noch nicht quittiert worden sind.

## Claims

1. Management system (1) for a technical facility, in particular a process or manufacturing facility, which has an operator station server (2) and an operator station client (3), wherein for control and monitoring the operator station server (2) is designed to transfer a facility mimic diagram (11, 12) of the technical facility to the operator station client (3), wherein the facility mimic diagram (11, 12) comprises an alarm signal indicator (14),
and wherein the operator station client (3) is designed to visually display the facility mimic diagram (11, 12) with the alarm signal indicator (14),
**characterised in that**
the operator station server (2) has a computer-implemented alarm signal service (8), which is designed to communicate to the operator station client (3), when transferring the facility mimic diagram (11, 12) with the alarm signal indicator (14), which duration it is allowed to expend for the visual display of the alarm signal indicator (14),
and wherein the operator station client (3) is designed to determine which value an actual display time has for the visual display of the alarm signal indicator (14),
wherein the alarm signal service (8) is also designed to inform the operator station client (3) about an emergence of a new or updated alarm signal in the management system (1) by way of a message,
wherein the operator station client (3) is designed to determine whether a display time for the visual display of the alarm signal indicator (14) with the new or updated alarm signal would overshoot the value of the duration, which the operator station client (3) is allowed to expend for the visual display of the alarm signal indicator (14),
and wherein the operator station client (3) is also designed to limit the visual display of the alarm signal indicator (14) when the available duration is overshot.

2. Management system (1) according to claim 1, wherein the message, which can be transmitted by the alarm signal service (8) to the operator station client (3), comprises information about a criticality of the alarm signal.

3. Management system (1) according to claim 1 or 2, wherein the message, which can be transmitted by the alarm signal service (8) to the operator station client (3), comprises information about an acknowledgement of the alarm signal that has possibly already taken place.

4. Management system (1) according to one of the preceding claims, wherein the limitation of the visual display of the alarm signal indicator (14) consists in that only alarm signals are displayed which have a particular criticality.

5. Management system (1) according to one of the preceding claims, wherein the limitation of the visual display of the alarm signal indicator (14) consists in that only alarm signals are displayed which have not yet been acknowledged.

6. Use of a management system (1) according to one of claims 1 to 5 for operation of a technical facility, in particular a process or manufacturing facility.

7. Method for visual display of a facility mimic diagram (11, 12) of a technical facility, in particular a process or manufacturing facility, which has an operator station server (2) and an operator station client (3), wherein the facility mimic diagram (11, 12) comprises an alarm signal indicator (14), the method comprising:
a) transferring a facility mimic diagram (11, 12) of the technical facility from the operator station server (2) to the operator station client (3), wherein the facility mimic diagram (1, 12) comprises the alarm signal indicator (14);
b) when transferring the facility mimic diagram (11, 12) with the alarm signal indicator (14), communicating a duration, which the operator station client (3) is allowed to expend for the visual display of the alarm signal indicator (14), by way of a computer-implemented alarm signal service (8) of the operator station server (2);
c) visual display of the facility mimic diagram (11, 12) with the alarm signal indicator (14) by the operator station client (3) ;
d) informing the operator station client (3) about an emergence of a new or updated alarm signal in the management system (1) via a message by the alarm signal service (8);
e) determining by way of the operator station client (3) which value an actual display time has for the visual display of the alarm signal indicator (14);
f) determining by way of the operator station client (3) whether a display time for the visual display of the alarm signal indicator (14) with the new or updated alarm signal would overshoot the value of the duration, which the operator station client (3) is allowed to apply for the visual display of the alarm signal indicator (14);
g) limiting the visual display of the alarm signal indicator (14) by the operator station client (3) when the available duration is overshot.

8. Method according to claim 7, wherein the message, which is transmitted by the alarm signal service (14) in method step e to the operator station client (3), comprises information about a criticality of the alarm signal.

9. Method according to claim 7 or 8, wherein the message, which is transmitted by the alarm signal service (14) in method step e to the operator station client (3), comprises information about an acknowledgement of the alarm signal that has possibly already taken place.

10. Method according to one of claims 7 to 9, wherein the limitation of the visual display of the alarm signal indicator (14) consists in that only alarm signals are displayed which have a particular criticality.

11. Method according to one of claims 7 to 10, wherein the limitation of the visual display of the alarm signal indicator (14) consists in that only alarm signals are displayed that have not yet been acknowledged.

## Revendications

1. Système (1) de conduite d'une installation technique, en particulier d'une installation de processus ou de fabrication, qui comporte un operator station server (2) et un operator station client (3), dans lequel l'operator station server (2) est constitué pour transmettre, pour la commande et l'observation, une image (11, 12) de l'installation technique à l'operator station client (3), dans lequel l'image (11, 12) de l'installation comprend une indication (14) de message d'alerte,
et dans lequel l'operator station client (3) est constitué pour représenter visuellement l'image (11, 12) de l'installation avec l'indication (14) de message d'alerte,
**caractérisé en ce que**
l'operator station server (2) a un service (8) de message d'alerte, qui est mis en oeuvre par ordinateur et qui est constitué pour faire part à l'operator station client (3), à la transmission de l'image (11, 12) de l'installation avec l'indication (14) du message d'alerte, de la durée, qu'il doit mettre en oeuvre pour la représentation visuelle de l'indication (14) du message d'alerte,
et dans lequel l'operator station client (3) est constitué pour déterminer le montant d'un temps de représentation réel de la représentation visuelle de l'indication (14) de message d'alerte, dans lequel le service (8) de message d'alerte est constitué en outre,
pour informer, par un message, l'operator station client (3) de l'arrivée d'un nouveau message d'alerte ou d'un message d'alerte mis à jour dans le système (1) de conduite,
dans lequel l'operator station client (3) est constitué pour déterminer, si un temps de représentation de la représentation visuelle de l'indication (14) du message d'alerte avec le nouveau message d'alerte ou le message d'alerte mis à jour dépasserait, en montant la durée que l'operator station client (3) doit mettre en oeuvre pour la représentation visuelle de l'indication (14) du message d'alerte,
et dans lequel l'operator station client (3) est constitué en outre pour limiter la représentation de l'indication (14) du message d'alerte, si la durée disponible est dépassée.

2. Système (1) de conduite suivant la revendication 1, dans lequel le message, qui peut être transmis du service (8) de message d'alerte à l'operator station client (3), comprend une information sur le caractère critique du message d'alerte.

3. Système (1) de conduite suivant la revendication 1 ou 2, dans lequel le message, qui peut transmis du service (8) de message d'alerte à l'operator station client (3), comprend une information sur un accusé de réception déjà effectué le cas échéant, du message d'alerte.

4. Système (1) de conduite suivant l'une des revendications précédentes, dans lequel la limitation de la représentation visuelle de l'indication (14) du message d'alerte consiste en ce que ne sont représentés que des messages d'alerte, qui ont un caractère critique déterminé.

5. Système (1) de conduite suivant l'une des revendications précédentes, dans lequel la limitation de la représentation visuelle de l'indication (14) du message d'alerte consiste à ne représenter que des messages d'alerte, dont il n'a pas encore été accusé réception.

6. Utilisation d'un système (1) de conduite suivant l'une des revendications 1 à 5, pour faire fonctionner une installation technique, en particulier une installation de processus ou de fabrication.

7. Procédé de représentation visuelle d'une image (11, 12) d'une installation technique, en particulier d'une installation de processus ou de fabrication, qui a un operator station server (2) et un operator station client (3), l'image (11, 12) de l'installation comprenant une indication (14) de message d'alerte, le procédé comprenant :
a) transmission d'une image (11, 12) de l'installation technique de l'operator station server (2) à l'operator station client (3), dans lequel l'image (1, 12) de l'installation comprend l'indication (14) du message d'alerte ;
b) à la transmission de l'image (11, 12) de l'installation avec l'indication (14) du message d'alerte, communication d'une durée que l'operator station client (3) peut appliquer pour la représentation visuelle de l'indication (14) des messages d'alerte par un service (8) de message d'alerte mis en oeuvre par ordinateur de l'operator station server (2) ;
c) représentation visuelle de l'image (11, 12) de l'installation avec l'indication (14) du message d'alerte par l'operator station client (3) ;
d) information de l'operator station client (3) de l'arrivée d'un message d'alerte nouveau ou mis à jour dans le système (1) de conduite, par un message par le service (8) de message d'alerte ;
e) détermination, par l'operator station client (3), du montant d'un temps de représentation réel de la représentation visuelle de l'indication (14) du message d'alerte ;
f) détermination, par l'operator station client (3), si un temps de représentation de la représentation visuelle de l'indication (14) de message d'alerte avec le message d'alerte nouveau ou mis à jour dépasserait, en montant, la durée que l'operator station client (3) peut mettre en oeuvre pour la représentation visuelle de l'indication (14) de message d'alerte ;
g) limitation de la représentation de l'indication (14) de message d'alerte par l'operator station client (3), si la durée disponible est dépassée.

8. Procédé suivant la revendication 7, dans lequel le message, qui est transmis par le service (14) de message d'alerte, dans le stade e du procédé, à l'operator station client (3), comprend une information sur le caractère critique du message d'alerte.

9. Procédé suivant la revendication 7 ou 8, dans lequel le message, qui est transmis par le service (14) de message d'alerte, dans le stade e du procédé, à l'operator station client (3), comprend une information sur un accusé de réception éventuellement déjà effectué du message d'alerte.

10. Procédé suivant l'une des revendications 7 à 9, dans lequel la limitation de la représentation visuelle de l'indication (14) du message d'alerte consiste en ce que ne sont représentés que des messages d'alerte, qui ont un caractère critique déterminé.

11. Procédé suivant l'une des revendications 7 à 10, dans lequel la limitation de la représentation visuelle de l'indication (14) du message d'alerte consiste à ne représenter que des messages d'alerte, dont on n'a pas encore accusé réception.
